# EUROPEAN PATENT APPLICATION

(11) **EP 4 647 300 A1**
(43) Date of publication of application: **12.11.2025**
(21) Application number: 23914571.7
(22) Date of filing: 28.12.2023
(51) Int. Cl.: B60Q 1/26, B60R 16/037, G06F 3/01, H04W 4/029, H04W 4/40, A63F 13/25, A63F 13/428, A63F 13/216

(54) **VEHICLE LAMP CONTROL METHOD, AND VEHICLE**

(30) Priority: 06.01.2023 CN 202310019057
(71) Applicant: Shenzhen Yinwang Intelligent Technologies Co., Ltd., Shenzhen, Guangdong 518110 (CN)
(72) Inventor: DUAN, Junke, Shenzhen, Guangdong 518129 (CN); HUANG, Xu, Shenzhen, Guangdong 518129 (CN); ZOU, Huan, Shenzhen, Guangdong 518129 (CN)
(74) Representative: Gill Jennings & Every LLP
(86) International application number: PCT/CN2023/142751
(87) International publication number: WO 2024/146439

(57) **Abstract**

A vehicle lamp control method, a control system, and a transportation means are provided, and may be mainly applied to a vehicle greeting scenario. The vehicle lamp control method includes: 301: A vehicle detects a first signal transmitted by a first device. 302: When detecting that the first device meets a trigger condition, the vehicle starts a vehicle lamp control system. 303: The vehicle adjusts a vehicle lamp based on a real-time status change of the first device. The real-time status change of the first device may be considered as a continuous status change. In other words, adjustment of the vehicle lamp is related to a status of the first device in real time. Therefore, a lighting manner of the vehicle lamp is changeable, and may be adjusted based on the real-time status change of the first device. For example, a projection of the vehicle lamp may move with the first device, so that the vehicle can implement more diverse greeting forms, and experience of interaction between a user and the vehicle is better.

## Description

This application claims priority to Chinese Patent Application No. 202310019057.5, filed with the China National Intellectual Property Administration on January 6, 2023 and entitled "VEHICLE LAMP CONTROL METHOD AND TRANSPORTATION MEANS", which is incorporated herein by reference in its entirety.

### TECHNICAL FIELD

This application relates to the field of automotive electronics technologies, and in particular, to a vehicle lamp control method and a transportation means.

### BACKGROUND

As vehicles become increasingly intelligent, people pay more attention to interaction and a sense of ceremony during vehicle use. Therefore, greeting functions of vehicles continuously develop. Vehicle greeting is to give a user a sense of ceremony through lamps, sounds, and the like in a process in which the user gets on or off a vehicle.

Currently, the vehicle greeting is usually triggered by using a key unlocking operation. After the greeting is triggered, the vehicle implements the greeting by controlling different lamps such as a position lamp, a signal lamp, a headlamp, and a tail lamp. However, the current greeting form is monotonous, and experience of interaction between the user and the vehicle is insufficient in a greeting process.

### SUMMARY

Embodiments of this application provide a vehicle lamp control method and a transportation means, so that a vehicle can implement more diverse greeting forms, and experience of interaction between a user and the vehicle is better.

According to a first aspect, an embodiment of this application provides a vehicle lamp control method. The method includes the following steps. First, a vehicle detects a first signal transmitted by a first device. When it is detected that the first device meets a trigger condition, a vehicle lamp control system is started. Further, the vehicle adjusts a vehicle lamp based on a real-time status change of the first device. It should be understood that the real-time status change of the first device may be considered as a continuous status change. In other words, adjustment of the vehicle lamp is related to a status of the first device in real time.

In this implementation, a lighting manner of the vehicle lamp is changeable, and may be adjusted based on the real-time status change of the first device. For example, a projection of the vehicle lamp may move with the first device, so that the vehicle can implement more diverse greeting forms, and experience of interaction between a user and the vehicle is better.

In some possible implementations, that the first device meets a trigger condition includes: A distance between the first device and the vehicle is less than or equal to a preset distance; and/or a shape formed based on a real-time position change of the first device meets a first preset shape; and/or a movement acceleration of the first device is greater than or equal to a preset value. This implementation provides a plurality of conditions for triggering start of the vehicle lamp control system, to adapt to a plurality of possible application scenarios.

In some possible implementations, the real-time status change of the first device includes at least one of a real-time change of the distance between the first device and the vehicle, the real-time position change of the first device, and a real-time movement acceleration change of the first device. This enriches specific implementations of adjusting the vehicle lamp.

In some possible implementations, the adjusting a vehicle lamp based on a real-time status change of the first device includes: adjusting a projected image of the vehicle lamp based on the real-time position change of the first device. For example, as the first device moves, the projected image of the vehicle lamp is updated in real time. This implementation extends a display effect of vehicle greeting, and implements richer user experience.

In some possible implementations, the adjusting a vehicle lamp based on a real-time status change of the first device includes: adjusting the vehicle lamp based on the real-time position change of the first device, so that a projection of the vehicle lamp follows the first device. This helps improve a sense of ceremony of vehicle greeting.

In some possible implementations, the method further includes: detecting a second signal transmitted by a second device; and when the second device is detected, adjusting the vehicle lamp based on the real-time status change of the first device and a real-time status change of the second device. In this implementation, greeting interaction with a plurality of user equipments may be implemented by adjusting the vehicle lamp. This further enriches greeting forms and further improves experience of interaction between the user and the vehicle.

In some possible implementations, the adjusting the vehicle lamp based on the real-time status change of the first device and a real-time status change of the second device includes: adjusting the projected image of the vehicle lamp based on a real-time change of a relative position between the first device and the second device. This implementation further enhances an atmosphere of interaction between a plurality of devices during vehicle greeting.

In some possible implementations, the adjusting the vehicle lamp based on the real-time status change of the first device and a real-time status change of the second device includes: adjusting the vehicle lamp based on the real-time position change of the first device and a real-time position change of the second device, so that the projection of the vehicle lamp follows the first device and the second device. This improves a sense of ceremony of vehicle greeting in a multi-user scenario.

In some possible implementations, the adjusting the vehicle lamp based on the real-time status change of the first device and a real-time status change of the second device includes: adjusting a game projection of the vehicle lamp based on the real-time status change of the first device and the real-time status change of the second device, so that the first device performs game interaction with the second device. This implementation provides a greeting form of game interaction, and further enriches user experience.

In some possible implementations, the method further includes: when the shape formed based on the real-time position change of the first device and a shape formed based on a real-time position change of the second device meet a second preset shape, controlling the vehicle lamp to perform game projection.

In some possible implementations, the first device is an ultra-wideband (ultra-wideband, UWB) device.

According to a second aspect, an embodiment of this application provides a transportation means. The transportation means includes a processor and a vehicle lamp control system. The processor is configured to: detect a first signal transmitted by a first device; when detecting that the first device meets a trigger condition, start the vehicle lamp control system; and further, control, based on a real-time status change of the first device, the vehicle lamp control system to adjust a vehicle lamp.

In some possible implementations, that the first device meets a trigger condition includes: A distance between the first device and the vehicle is less than or equal to a preset distance; and/or a shape formed based on a real-time position change of the first device meets a first preset shape; and/or a movement acceleration of the first device is greater than or equal to a preset value.

In some possible implementations, the real-time status change of the first device includes at least one of a real-time change of the distance between the first device and the vehicle, the real-time position change of the first device, and a real-time movement acceleration change of the first device.

In some possible implementations, the processor is specifically configured to control, based on the real-time position change of the first device, the vehicle lamp control system to adjust a projected image of the vehicle lamp.

In some possible implementations, the processor is specifically configured to control, based on the real-time position change of the first device, the vehicle lamp control system to adjust the vehicle lamp, so that a projection of the vehicle lamp follows the first device.

In some possible implementations, the processor is specifically configured to control, based on the real-time status change of the first device and a real-time status change of a second device, the vehicle lamp control system to adjust the vehicle lamp.

In some possible implementations, the processor is specifically configured to control, based on a real-time change of a relative position between the first device and the second device, the vehicle lamp control system to adjust the projected image of the vehicle lamp.

In some possible implementations, the processor is specifically configured to control, based on the real-time position change of the first device and a real-time position change of the second device, the vehicle lamp control system to adjust the vehicle lamp, so that the projection of the vehicle lamp follows the first device and the second device.

In some possible implementations, the processor is specifically configured to control, based on the real-time status change of the first device and the real-time status change of the second device, the vehicle lamp control system to adjust a game projection of the vehicle lamp, so that the first device performs game interaction with the second device.

In some possible implementations, when the shape formed based on the real-time position change of the first device and a shape formed based on a real-time position change of the second device meet a second preset shape, the processor is further configured to control the vehicle lamp control system to drive the vehicle lamp to perform game projection.

In some possible implementations, the first device is a UWB device.

According to a third aspect, an embodiment of this application provides a vehicle lamp. The vehicle lamp includes a controller, a drive module, and a lighting module. When a first device meets a trigger condition, the controller is configured to control the drive module to start the lighting module. The controller is further configured to control, based on a real-time status change of the first device, the drive module to adjust the lighting module.

In some possible implementations, that the first device meets a trigger condition includes: A distance between the first device and a vehicle is less than or equal to a preset distance; and/or a shape formed based on a real-time position change of the first device meets a first preset shape; and/or a movement acceleration of the first device is greater than or equal to a preset value.

In some possible implementations, the real-time status change of the first device includes at least one of a real-time change of the distance between the first device and the vehicle, the real-time position change of the first device, and a real-time movement acceleration change of the first device.

In some possible implementations, the controller is specifically configured to control, based on the real-time position change of the first device, the drive module to adjust a projected image of the lighting module.

In some possible implementations, the controller is specifically configured to control, based on the real-time position change of the first device, the drive module to adjust the lighting module, so that a projection of the lighting module follows the first device.

In some possible implementations, the controller is specifically configured to control, based on the real-time status change of the first device and a real-time status change of a second device, the drive module to adjust the lighting module.

In some possible implementations, the controller is specifically configured to control, based on a real-time change of a relative position between the first device and the second device, the drive module to adjust the projected image of the lighting module.

In some possible implementations, the controller is specifically configured to control, based on the real-time position change of the first device and a real-time position change of the second device, the drive module to adjust the lighting module, so that the projection of the lighting module follows the first device and the second device.

In some possible implementations, the controller is specifically configured to control, based on the real-time status change of the first device and the real-time status change of the second device, the drive module to adjust a game projection of the lighting module, so that the first device performs game interaction with the second device.

In some possible implementations, when the shape formed based on the real-time position change of the first device and a shape formed based on a real-time position change of the second device meet a second preset shape, the controller is further configured to control the drive module to drive the lighting module to perform game projection.

In some possible implementations, the first device is a UWB device.

In this embodiment of this application, when detecting that the first device meets the trigger condition, the vehicle starts a vehicle control system. Further, the vehicle adjusts the vehicle lamp based on the real-time status change of the first device. In other words, a lighting manner of the vehicle lamp is changeable, and may be adjusted based on the real-time status change of the first device. For example, a projection of the vehicle lamp may move with the first device, so that the vehicle can implement more diverse greeting forms, and experience of interaction between a user and the vehicle is better.

### BRIEF DESCRIPTION OF DRAWINGS

FIG. 1 is a diagram of vehicle greeting;
FIG. 2 is a diagram of a structure of a vehicle control system;
FIG. 3 is a schematic flowchart of a vehicle lamp control method according to an embodiment of this application;
FIG. 4 is a diagram of a first greeting scenario according to an embodiment of this application;
FIG. 5 is a diagram of a second greeting scenario according to an embodiment of this application;
FIG. 6 is a diagram of a third greeting scenario according to an embodiment of this application;
FIG. 7 is a diagram of a fourth greeting scenario according to an embodiment of this application;
FIG. 8 is a diagram of a fifth greeting scenario according to an embodiment of this application;
FIG. 9 is a diagram of a sixth greeting scenario according to an embodiment of this application;
FIG. 10 is a diagram of a seventh greeting scenario according to an embodiment of this application;
FIG. 11 is a diagram of an eighth greeting scenario according to an embodiment of this application;
FIG. 12 is a diagram of a ninth greeting scenario according to an embodiment of this application;
FIG. 13 is a diagram of a tenth greeting scenario according to an embodiment of this application;
FIG. 14 is a diagram of a function of a transportation means according to an embodiment of this application; and
FIG. 15 is a diagram of a function of a vehicle lamp according to an embodiment of this application.

### DESCRIPTION OF EMBODIMENTS

Embodiments of this application provide a vehicle lamp control method and a transportation means, so that a vehicle can implement more diverse greeting forms, and experience of interaction between a user and the vehicle is better. It should be noted that in the specification, claims, and accompanying drawings of this application, the terms "first" and "second" are intended to distinguish between similar objects but do not limit a specific order or sequence. It should be understood that the foregoing terms are interchangeable in proper cases, so that embodiments described in this application can be implemented in a sequence other than the content described in this application. In addition, the terms "include", "have", and any other variant thereof are intended to cover a non-exclusive inclusion. For example, processes, methods, systems, products, or devices that include a series of steps or units are not necessarily limited to the steps or the units that are clearly listed, but may include other steps or units that are not clearly listed or that are inherent to the processes, methods, products, or devices.

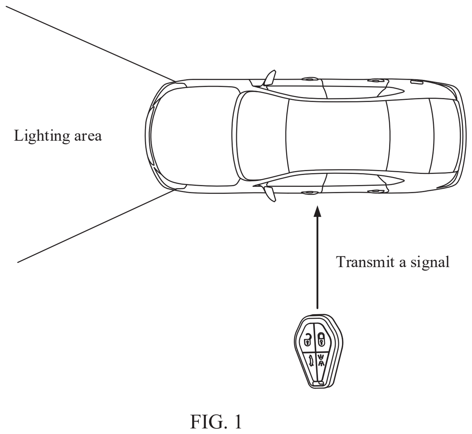

FIG. 1 is a diagram of vehicle greeting. As shown in FIG. 1, when a key enters an identification range of a vehicle, the vehicle may detect a signal transmitted by the key. If the vehicle detects that the key meets a trigger condition, the vehicle starts greeting, for example, turning on a vehicle lamp, opening a vehicle door, making a sound, or another greeting operation. It should be noted that, in this application, after starting the greeting, the vehicle continues to detect, in real time, the signal transmitted by the key, to adjust greeting content based on a real-time status change of the key. In other words, after the greeting starts, the greeting content is changeable, and may continuously change based on the real-time status change of the key. It should be understood that the greeting content in this application is not limited to an operation performed by the vehicle in a form of greeting before a user gets on the vehicle. An entertainment manner provided by the vehicle for the user may also be considered as a form of greeting. For example, the vehicle provides a game projection for the user by using the vehicle lamp. Therefore, display of various functions provided by the vehicle for the user may be considered as the greeting. A form of greeting includes but is not limited to vehicle lamp control, sound control, seat control, steering wheel control, and vehicle door opening and closing.

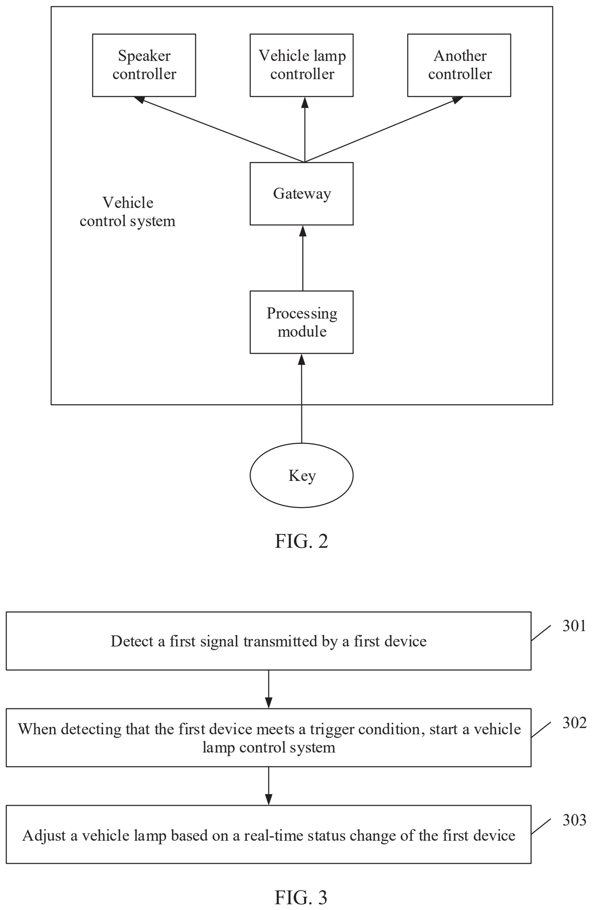

FIG. 2 is a diagram of a structure of a vehicle control system. As shown in FIG. 2, a processing module detects, in real time, a signal transmitted by a key, and after processing the signal, generates a control signal. The processing module transmits the control signal to a gateway, and a controller (for example, a vehicle lamp controller, a speaker controller, or another controller) on the vehicle for implementing functions of various parts may obtain the control signal from the gateway, to perform a corresponding greeting operation.

The following describes in detail the vehicle lamp control method provided in this application.

FIG. 3 is a schematic flowchart of a vehicle lamp control method according to an embodiment of this application. In this example, the vehicle lamp control method includes the following steps.

301: Detect a first signal transmitted by a first device.

In this embodiment, the first device may be user equipment in any form authorized by a vehicle, and a type of the first device includes but is not limited to a vehicle key, a smartphone, a smartwatch, a smart band, and the like. A manner for communication between the vehicle and the first device includes but is not limited to Bluetooth communication, Wi-Fi communication, ultra-wideband (ultra-wideband, UWB) communication, and the like. In a possible implementation, the vehicle communicates with the first device through UWB, the first signal sent by the first device is a UWB pulse signal, and the first device may also be referred to as a "UWB device".

302: When detecting that the first device meets a trigger condition, start a vehicle lamp control system.

It should be noted that a specific form of the trigger condition is not limited in this application. The following provides several possible trigger conditions. First, a distance between the first device and the vehicle is less than or equal to a preset distance. For example, the preset distance may be 10 m or 15 m. Second, a shape formed based on a real-time position change of the first device meets a first preset shape. In other words, a movement track of the first device meets the first preset shape. For example, the first preset shape may be a circle, an ellipse, or a triangle. Third, a movement acceleration of the first device is greater than or equal to a preset value. For example, the user holds the first device to perform a hand-shaking operation, so that a real-time acceleration of the first device is greater than or equal to the preset value.

When the vehicle detects that the first device meets the trigger condition, the vehicle determines that greeting can be started, and then starts the vehicle lamp control system, to perform greeting through lighting. It should be understood that the greeting form provided in this application is not limited to lighting. When the first device meets the trigger condition, the vehicle may alternatively start another control system like a speaker control system, to implement another greeting form like a sound or seat movement.

303: Adjust a vehicle lamp based on a real-time status change of the first device.

In this embodiment, the real-time status change of the first device may be considered as a continuous status change. In other words, adjustment of the vehicle lamp is related to a status of the first device in real time. For example, when the first device is 10 m away from the vehicle, a lighting form is displayed, and when the first device is 5 m away from the vehicle, another lighting form is displayed. In this case, although the status of the first device changes, a series of status changes significantly occur between the two statuses. Therefore, this case cannot be considered as the real-time status change of the first device, and this vehicle lamp adjustment manner is not related to the status of the first device in real time. In a same example, in a process in which the first device is 10 m to 5 m away from the vehicle, in this application, a lighting form of a lamp needs to be adjusted in real time, to reflect real-time interaction between the vehicle and the first device.

It should be understood that the real-time status change of the first device includes but is not limited to a real-time change of the distance between the first device and the vehicle, the real-time position change of the first device, and a real-time movement acceleration change of the first device. The real-time position change of the first device may be considered as a real-time movement track of the first device.

The following uses some specific application scenarios as examples to describe greeting forms related to the status of the first device in real time.

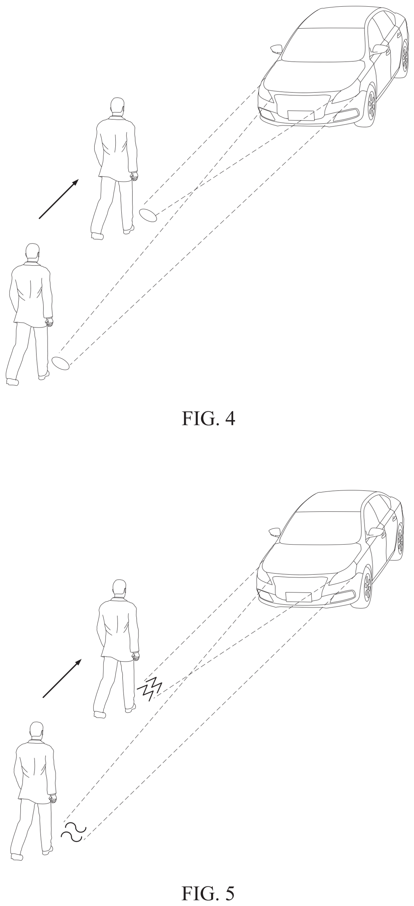

In a possible implementation, the vehicle adjusts the vehicle lamp based on the real-time position change of the first device, so that a projection of the vehicle lamp follows the first device. FIG. 4 is a diagram of a first greeting scenario according to an embodiment of this application. As shown in FIG. 4, in a process in which a vehicle owner moves carrying the first device, the vehicle controls the vehicle lamp to perform projection on the feet of the vehicle owner, and the projection moves along with footsteps of the vehicle owner.

In a possible implementation, the vehicle adjusts a projected image of the vehicle lamp based on the real-time position change of the first device. FIG. 5 is a diagram of a second greeting scenario according to an embodiment of this application. As shown in FIG. 5, in a process in which a vehicle owner moves carrying the first device, the vehicle controls the vehicle lamp to perform projection on the feet of the vehicle owner, and the projected image changes with a real-time position of the vehicle owner. In other words, when the projection of the vehicle lamp moves with the footsteps of the vehicle owner, the projected image of the vehicle lamp also changes in real time. In some scenarios, the projection of the vehicle lamp may also be projected onto a fixed position in front of the vehicle, and the projected image changes with the real-time position of the vehicle owner. In another possible implementation, the vehicle may alternatively adjust the projected image of the vehicle lamp based on the real-time change of the distance between the first device and the vehicle. For example, as a vehicle owner gradually approaches the vehicle, the vehicle lamp sequentially projects different greeting slogans. In still another possible implementation, the vehicle may further adjust the projected image of the vehicle lamp based on the real-time movement acceleration change of the first device. For example, if a moving speed of a vehicle owner suddenly increases and a movement acceleration reaches the preset value, the vehicle may control the vehicle lamp to change the projected image, or different movement accelerations of the vehicle owner in different intervals correspond to different projected images. In yet another possible implementation, the vehicle owner holds the first device to draw a specified shape, and the vehicle lamp projects an image corresponding to the shape.

It should be understood that a specific form of the projected image is not limited in this application. For example, the projected image may be a logo of the vehicle, a shape of the footstep, a ripple, or some welcome slogans.

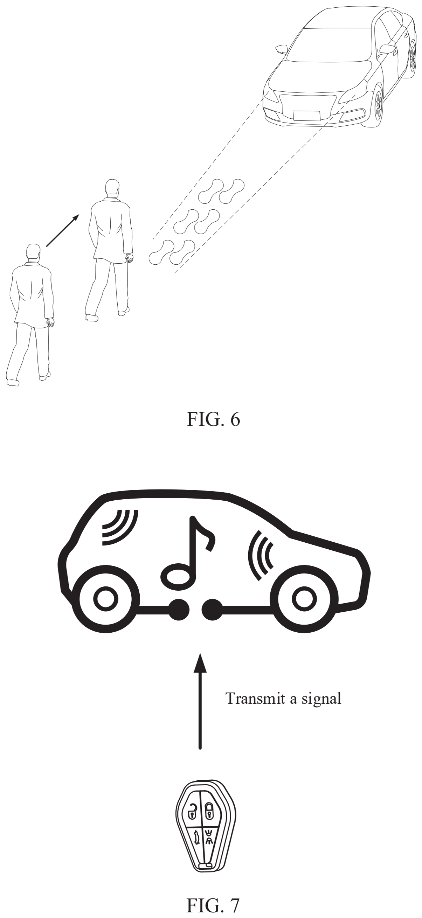

In a possible implementation, the vehicle adjusts the projected image of the vehicle lamp based on the real-time position change of the first device and/or the real-time change of the distance between the first device and the vehicle, to guide a vehicle owner by using the projected image. FIG. 6 is a diagram of a third greeting scenario according to an embodiment of this application. As shown in FIG. 6, in a process in which the vehicle owner moves carrying the first device, the vehicle may analyze a movement trend of the vehicle owner based on the real-time position change of the first device and/or the real-time change of the distance between the first device and the vehicle. For example, the movement trend of the vehicle owner is approaching the vehicle or moving away from the vehicle. Further, the vehicle controls the vehicle lamp to perform projection in a direction of the movement trend of the vehicle owner. For example, the vehicle lamp projects a string of footstep patterns, to guide the vehicle owner to move in the direction.

The foregoing mainly describes some scenarios in which greeting is implemented through lighting. The following describes several greeting forms other than lighting. In a possible implementation, the vehicle may adjust a sound, open or close a vehicle door, and/or adjust a seat based on the real-time status change of the first device.

FIG. 7 is a diagram of a fourth greeting scenario according to an embodiment of this application. In an example, in a process in which the vehicle owner moves carrying the first device, the vehicle adjusts the speaker based on the real-time status change of the first device to play music at different rhythms. For example, a shorter distance from the vehicle owner to the vehicle speaker indicates a faster rhythm of music played by the vehicle speaker. Alternatively, a higher speed at which the vehicle owner moves indicates a faster rhythm of music played by the vehicle speaker. Alternatively, the vehicle owner holds the first device to draw a specified shape, and the speaker plays music corresponding to the shape.

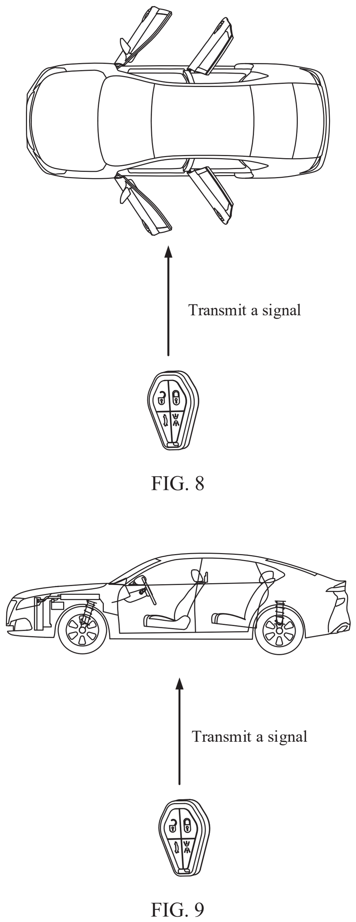

FIG. 8 is a diagram of a fifth greeting scenario according to an embodiment of this application. In another example, in a process in which the vehicle owner moves carrying the first device, the vehicle controls opening and closing of the vehicle door based on the real-time status change of the first device. For example, in a process in which the vehicle owner gradually approaches the vehicle, the vehicle door is completely closed, gradually opened, and then fully opened. Alternatively, the vehicle owner holds the first device to draw a specified shape, and the vehicle controls the vehicle door to be opened or closed.

FIG. 9 is a diagram of a sixth greeting scenario according to an embodiment of this application. In still another example, in a process in which the vehicle owner moves carrying the first device, the vehicle adjusts a seat to move based on the real-time status change of the first device. For example, in a process in which the vehicle owner gradually approaches the vehicle, the vehicle controls the seat to gradually move backward, to greet the vehicle owner to enter the vehicle. Alternatively, the vehicle owner holds the first device to draw a specified shape, and the vehicle controls the seat to gradually move backward, to greet the vehicle owner to enter the vehicle.

It should be noted that, in this application, the vehicle may further implement greeting interaction with a plurality of user equipments. A specific quantity of user equipments is not limited in this application. The following uses an example in which the plurality of user equipments include a first device and a second device for description.

Specifically, the vehicle detects a first signal transmitted by the first device, and detects a second signal transmitted by the second device. When the vehicle detects that at least one of the first device and the second device meets a trigger condition, the vehicle starts a corresponding control system on the vehicle to start greeting. For the trigger condition, refer to the related descriptions in step 302 in the embodiment shown in FIG. 3. Details are not described herein again. It should be understood that the first device and the second device may have a same trigger condition. Alternatively, the first device and the second device may have respective trigger conditions. Alternatively, there may be a primary/secondary relationship between the first device and the second device. For example, the first device is a primary device, and the second device is a secondary device. When the first device meets the trigger condition, the vehicle can start the greeting provided that the vehicle can detect the second signal transmitted by the second device, and the second device does not need to meet the trigger condition. In some possible scenarios, the primary device may alternatively collect a signal transmitted by the secondary device. The signal transmitted by the primary device includes a signal generated by the primary device and the signal from the secondary device. Further, the vehicle adjusts a greeting form based on the real-time status change of the first device and a real-time status change of the second device. For the real-time status change of the device, refer to the related descriptions in step 303 in the embodiment shown in FIG. 3. Details are not described herein again.

In some scenarios, the greeting forms displayed by the vehicle for the first device and the second device may be independent of each other. For example, the vehicle adjusts the greeting form for the first device based on the real-time status change of the first device, and adjusts the greeting form for the second device based on the real-time status change of the second device. In some other scenarios, the vehicle may implement interaction between the first device and the second device in the greeting forms displayed by the vehicle for the first device and the second device. For example, the vehicle implements game interaction between the first device and the second device through light projection.

The following uses some specific application scenarios as examples to describe greeting forms related to the status of the first device and a status of the second device in real time.

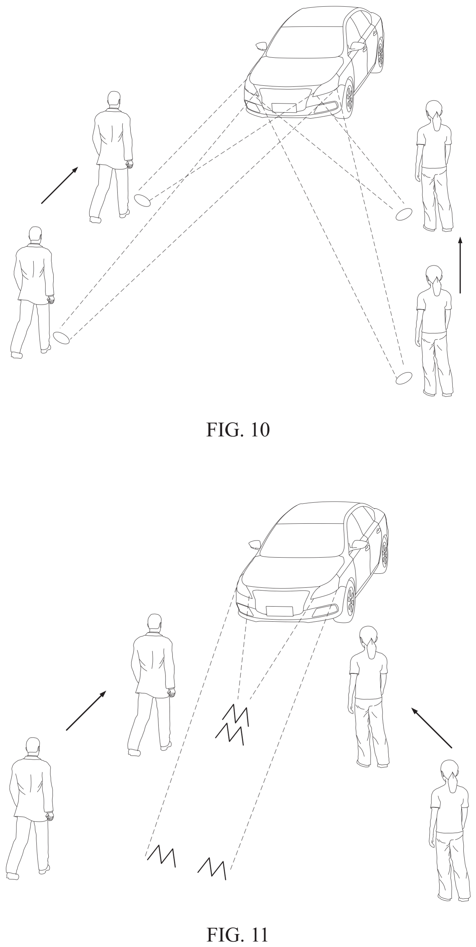

In a possible implementation, the vehicle adjusts the vehicle lamp based on the real-time position change of the first device and a real-time position change of the second device, so that the projection of the vehicle lamp follows the first device and the second device. FIG. 10 is a diagram of a seventh greeting scenario according to an embodiment of this application. As shown in FIG. 10, a male vehicle owner moves carrying the first device, and a female vehicle owner moves carrying the second device. The vehicle controls the vehicle lamp to respectively perform projection on the feet of the male vehicle owner and the feet of the female vehicle owner, and projections respectively move along with footsteps of the male vehicle owner and footsteps of the female vehicle owner. It should be understood that projected images displayed by the vehicle lamp for different devices may be the same. Alternatively, projected images displayed by the vehicle lamp for different devices may be different, to meet personalized customization. In addition, when the projection of the vehicle lamp follows the user, the projected image of the vehicle lamp may also change in real time.

In a possible implementation, the vehicle adjusts the projected image of the vehicle lamp based on a real-time change of a relative position between the first device and the second device. FIG. 11 is a diagram of an eighth greeting scenario according to an embodiment of this application. As shown in FIG. 11, the male vehicle owner moves carrying the first device, and the female vehicle owner moves carrying the second device. The male vehicle owner and the female vehicle owner gradually approach each other in a moving process, in other words, a real-time relative distance between the male vehicle owner and the female vehicle owner gradually decreases, and projected images of the vehicle lamp change accordingly. For example, when the distance between the male vehicle owner and the female vehicle owner is long, the projected images of the vehicle lamp are also far away from each other. As the male vehicle owner and the female vehicle owner gradually approach each other, the projected images of the vehicle lamp also gradually approach each other. Similarly, if the male vehicle owner and the female vehicle owner gradually move away from each other, the projected images of the vehicle lamp also gradually move away from each other.

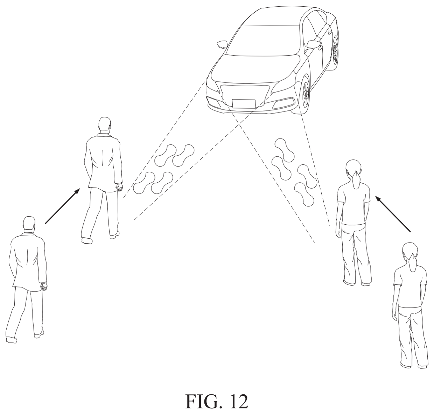

In a possible implementation, the vehicle adjusts the projected images of the vehicle lamp based on the real-time position change of the first device and the real-time position change of the second device, to separately guide the first device and the second device by using the projected images. Alternatively, the vehicle adjusts the projected images of the vehicle lamp based on a real-time change of a distance between the first device and the vehicle and a real-time change of a distance between the second device and the vehicle, to separately guide the first device and the second device by using the projected images. FIG. 12 is a diagram of a ninth greeting scenario according to an embodiment of this application. As shown in FIG. 12, the male vehicle owner moves carrying the first device, and the female vehicle owner moves carrying the second device. The vehicle may analyze a movement trend of the male vehicle owner based on the real-time position change of the first device and/or the real-time change of the distance between the first device and the vehicle, and the vehicle may analyze a movement trend of the female vehicle owner based on the real-time position change of the second device and/or the real-time change of the distance between the second device and the vehicle. Further, the vehicle controls the vehicle lamp to perform projection in a direction of the movement trend of the male vehicle owner, and perform projection in a direction of the movement trend of the female vehicle owner. For example, the vehicle lamp projects a string of footstep patterns to guide the male vehicle owner to move to a seat on one side, and the vehicle lamp projects another string of footstep patterns to guide the female vehicle owner to move to a seat on the other side.

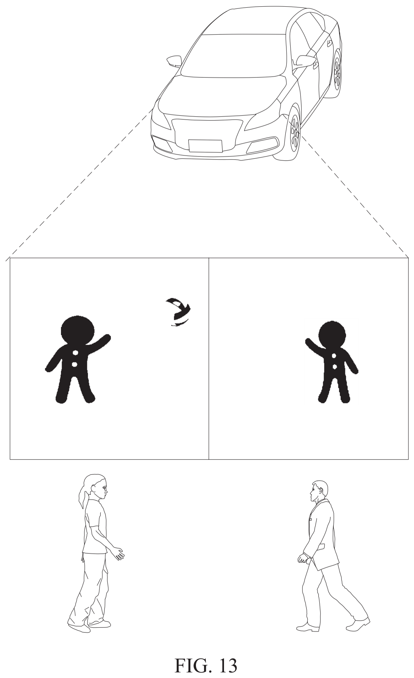

In a possible implementation, the vehicle adjusts a game projection of the vehicle lamp based on the real-time status change of the first device and the real-time status change of the second device, so that the first device performs game interaction with the second device. It should be understood that, in some scenarios, the vehicle controls the vehicle lamp to perform game projection only when the first device and the second device meet a specified trigger condition. For example, when real-time movement tracks of the first device and the second device are both drawn in a shape of a letter "G", the vehicle lamp performs game projection. FIG. 13 is a diagram of a tenth greeting scenario according to an embodiment of this application. As shown in FIG. 13, the vehicle lamp performs projection of a volleyball game. The male vehicle owner carries the first device as a player 1 of the volleyball game, and the female vehicle owner carries the second device as a player 2 of the volleyball game. In an example, the vehicle may specifically adjust the game projection based on the real-time position changes of the first device and the second device. For example, if the male vehicle owner moves carrying the first device, the player 1 in the game projection also moves in a same manner; and if the female vehicle owner moves carrying the second device, the player 2 in the game projection also moves in a same manner. In another example, the vehicle may further adjust the game projection based on real-time movement acceleration changes of the first device and the second device. For example, the male vehicle owner waves a hand with a large force carrying the first device, in other words, a movement acceleration of the first device is large, and a flight speed of a volleyball played by the player 1 in game projection is high. The female vehicle owner waves a hand with a small force carrying the second device, in other words, a movement acceleration of the second device is small, and a flight speed of a volleyball played by the player 2 in game projection is low.

In a possible implementation, the vehicle may adjust a sound, open and close a vehicle door, and/or adjust a seat based on the real-time status change of the first device and the real-time status change of the second device. In an example, the male vehicle owner moves carrying the first device, and the female vehicle owner moves carrying the second device. If a shape drawn based on the real-time movement track of the first device and a shape drawn based on the real-time movement track of the second device meet a specified shape, the speaker plays specified music.

In another example, the male vehicle owner moves carrying the first device, and the female vehicle owner moves carrying the second device. In a process in which the male vehicle owner gradually approaches the vehicle, a driver door is completely closed, gradually opened, and then completely opened. In a process in which the female vehicle owner gradually approaches the vehicle, a passenger door is completely closed, gradually opened, and then completely opened. Alternatively, the male vehicle owner holds the first device to draw a specified shape, and the vehicle controls the driver door to be opened or closed; and the female vehicle owner holds the second device to draw a specified shape, and the vehicle controls the passenger door to be opened or closed.

In still another example, the male vehicle owner moves carrying the first device. In a process in which the male vehicle owner gradually approaches the vehicle, the vehicle can control a driver seat to gradually move backward, to greet the male vehicle owner to enter the vehicle. The female vehicle owner moves carrying the second device. In a process in which the female vehicle owner gradually approaches the vehicle, the vehicle controls a passenger seat to gradually move backward, to greet the female vehicle owner to enter the vehicle. Alternatively, the male vehicle owner holds the first device to draw a specified shape, and the vehicle controls the driver seat to gradually move backward, to greet the male vehicle owner to enter the vehicle. The female vehicle owner holds the second device to draw a specified shape, and the vehicle controls the passenger seat to gradually move backward, to greet the female vehicle owner to enter the vehicle.

It should be noted that the various greeting scenarios described above are not necessarily independent of each other. For example, vehicle lamp control, speaker control, vehicle door control, and seat control may be combined for unified arrangement, to implement a diversified greeting form. A specific implementation is subject to an actual application, and may be flexibly changed and combined based on the various greeting scenarios described above.

It can be learned from the foregoing descriptions that, when the vehicle detects that the first device meets the trigger condition, the vehicle control system is started. Further, the vehicle adjusts the vehicle lamp based on the real-time status change of the first device. In other words, a lighting manner of the vehicle lamp is changeable, and may be adjusted based on the real-time status change of the first device. For example, a projection of the vehicle lamp may move with the first device, so that the vehicle can implement more diverse greeting forms, and experience of interaction between a user and the vehicle is better.

It should be noted that the greeting method described above may be mainly applied to a transportation means. More specifically, the method may be mainly applied to an intelligent cockpit, a vehicle lamp, or the like mounted on a transportation means. For example, the vehicle lamp control method described above may be applied to a vehicle lamp. The following describes in detail the vehicle lamp and the transportation means provided in this application.

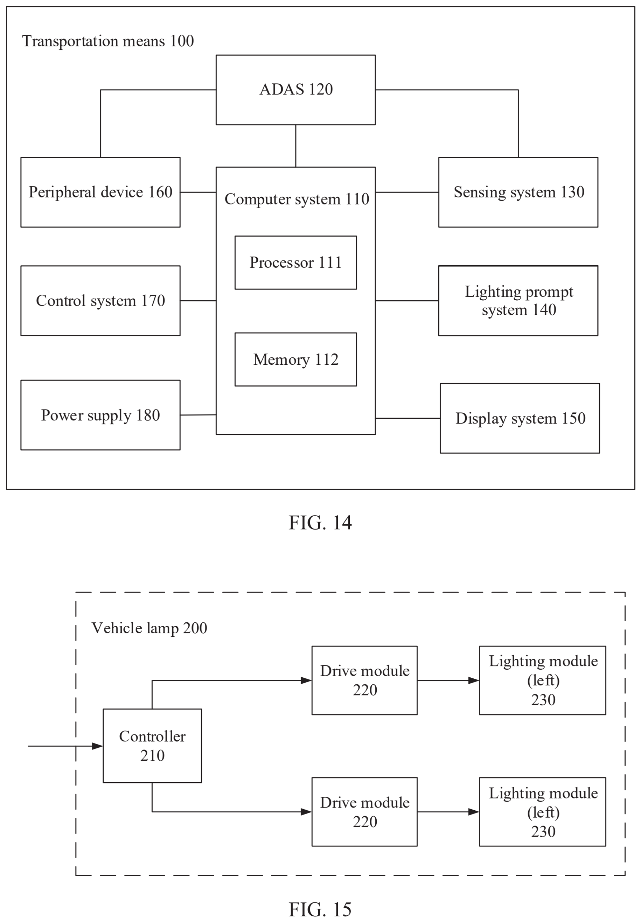

FIG. 14 is a diagram of a function of a transportation means according to an embodiment of this application. As shown in FIG. 14, the transportation means 100 may include various systems, and each system may include a plurality of elements, for example, a computer system 110, an advanced driver assistance system (advanced driving assistance system, ADAS) 120, a sensing system 130, a lighting prompt system 140, a display system 150, one or more peripheral devices 160 (one peripheral device is used as an example in the figure), a control system 170, and a power supply 180 in the figure. The foregoing subsystems may communicate with each other, including but not limited to wired communication and wireless communication. The transportation means may further include another function system, for example, an engine system that supplies power to the transportation means, and a cockpit. This is not limited herein in this application.

The vehicle shown in this embodiment includes the sensing system 130. The sensing system 130 may include several detection apparatuses. These detection apparatuses can sense measured information, and convert the sensed information into an electrical signal or information in another required form according to a specific rule for output. For example, the sensor system 130 may include a positioning system, an inertial measurement unit (inertial measurement unit, IMU), a radar, a laser rangefinder, a camera apparatus, and the like. The sensor system 120 may further include a sensor (for example, an in-vehicle air quality monitor, a fuel gauge, or an engine oil temperature gauge) of an internal system of the transportation means 100. Sensor data from one or more of these sensors can be used to detect an object and corresponding features (a position, a shape, a direction, a speed, and the like) of the object. Such detection and recognition are key functions for implementing a secure operation of the transportation means 100.

Specifically, the positioning system may be a global positioning system (global positioning system, GPS), a BeiDou system, or another positioning system. The positioning system may be configured to estimate a geographical position of the transportation means 100. The IMU is configured to sense position and orientation changes of the transportation means 100 based on an inertial acceleration. In an embodiment, the IMU may be a combination of an accelerometer and a gyroscope. The radar may sense an object in an ambient environment of the transportation means 100 by using a radio signal or an ultrasonic wave. A specific type of the radar is not limited in this embodiment. For example, the radar may be a millimeter-wave radar or a lidar. The laser rangefinder may sense, by using a laser, an object in an environment in which the transportation means 100 is located. In some embodiments, the laser rangefinder may include one or more laser sources, a laser scanner, one or more detectors, and another system component. The camera apparatus may be configured to capture an image of an ambient environment of the transportation means 100, and may be a static camera, a video camera, a monocular/binocular camera, an infrared imager, or the like.

The lighting prompt system 140 includes various apparatuses that implement a lighting prompt function. For example, the transportation means 100 is a vehicle, and the lighting prompt system 140 includes but is not limited to a headlamp, a tail lamp, and a turn signal of the vehicle. The headlamp includes a high beam, a low beam, a smart vehicle lamp, and the like. Specifically, the smart vehicle lamp of the vehicle may implement an adaptive driving beam (Adaptive Driving Beam, ADB) system, to avoid dazzling a driver on an opposite vehicle or a pedestrian; and may further project a complex graphic like a text or a traffic sign, and a picture like a video, which is widely used in assisted driving and entertainment scenarios. It should be understood that the lighting prompt system may also be referred to as a "vehicle lamp control system".

The display system 150 may display image information, for example, display navigation information or play a video. The display system includes a dashboard, a display, a head-up display (Head-UP Display, HUD), and the like. This is not limited in this application.

The peripheral device 160 may include several elements, for example, a communication system, a touchscreen, a user interface, a microphone, and a speaker. The communication system is configured to implement network communication between the transportation means and a device other than the transportation means. During actual application, the communication system may implement network communication between the transportation means and another device by using a wireless communication technology or a wired communication technology. The wired communication technology may mean that the vehicle communicates with another device through a network cable, an optical fiber, or the like. The wireless communication technology may be an infrared technology, Bluetooth, a ZigBee (ZigBee) protocol, a wireless local area network (wireless local area network, WLAN), or the like, or may be a third generation mobile communication technology (3rd generation mobile communication technology, 3G), a fourth generation mobile communication technology (4th generation mobile communication technology, 4G), a fifth generation mobile communication technology (5th generation mobile communication technology, 5G), and a mobile communication technology of a next generation or even next several generations. This is not limited in this application.

The control system 170 may include several elements, for example, a steering unit, a brake unit, an autonomous driving system, a map navigation system, a network time synchronization system, an obstacle avoidance system, and the like. The control system 170 may receive information (for example, a vehicle speed and an inter-vehicle distance) sent by the sensing system 130, to implement functions such as autonomous driving and map navigation.

Optionally, the control system 170 may further include elements such as a throttle controller configured to control a driving speed of the vehicle and an engine controller. This is not limited in this application.

The power supply 180 represents a system that provides power or energy for the vehicle, and may include but is not limited to a rechargeable lithium battery or a lead-acid battery. During actual application, one or more battery components in the power supply are configured to provide electrical energy or energy for starting the vehicle. A type and a material of the power supply are not limited in this application.

Several functions of the transportation means may be controlled and implemented by the computer system 110. The computer system 110 may include one or more processors 111 (one processor is shown as an example in the figure) and a memory 112 (which may also be referred to as a storage apparatus). In actual application, the memory 112 may be inside the computer system 110, or may be outside the computer system 110, for example, used as a cache in the transportation means. This is not limited in this application.

The processor 111 may be one or more graphics processing units (graphics processing units, GPUs), a field-programmable gate array (field-programmable gate array, FPGA), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD) or another integrated chip, or any combination of the foregoing chips or processors.

The memory 112 may include a volatile memory (volatile memory), for example, a RAM. Alternatively, the memory may include a non-volatile memory (non-volatile memory), for example, a ROM, a flash memory (flash memory), a hard disk drive HDD, or a solid-state drive SSD. Alternatively, the memory 112 may include a combination of the foregoing types of memories. The memory 112 may be configured to store a set of program code or instructions corresponding to the program code, so that the processor 111 invokes the program code or the instructions stored in the memory 112 to implement a corresponding function of the vehicle. In this application, the memory 112 may store a set of program code used to control the transportation means. The processor 111 may invoke the program code to control safe traveling of the transportation means. How to implement safe traveling of the transportation means is described in detail below in this application.

Some transportation means, for example, vehicles having a specific autonomous driving function, further include the advanced driver assistance system (advanced driving assistance system, ADAS) 120. The ADAS 120 senses an ambient environment, collects data, identifies, detects, and tracks static and dynamic objects, and performs systematic calculation and analysis with reference to navigation map data at any time in a traveling process of the vehicle, so that a driver can perceive a potential danger in advance. This effectively improves comfort and safety of vehicle driving. For example, the ADAS 120 may control the vehicle based on data obtained by the sensing system 130, to avoid a driving danger. For another example, the ADAS 120 may control the vehicle based on head unit data. The head unit data may be main data (fuel consumption, an engine rotation speed, a temperature, and the like), vehicle speed information, steering wheel angle information, body posture data, or the like on a vehicle dashboard. Specifically, that the ADAS 120 controls the vehicle includes but is not limited to adjusting a forward direction of the vehicle, controlling a speed of the vehicle, and automatic parking.

In a possible implementation, the sensing system 130 is configured to: detect a signal transmitted by user equipment that is authorized by the vehicle, and send detected information to the computer system 110. The computer system 110 analyzes and processes the detected information to generate a control signal, and then the control signal may be transmitted to the ADAS 120, the lighting prompt system 140, the display system 150, the peripheral device 160, the control system 170, and the like through a bus. In an example, the computer system 110 detects that the user equipment meets a trigger condition, to start the lighting prompt system 140. In addition, the computer system 110 may generate a corresponding control signal based on a real-time status change of the user equipment, and the lighting prompt system 140 adjusts a lighting effect of a vehicle lamp based on the control signal.

The several subsystems shown in this embodiment are merely examples, and do not constitute a limitation. In actual application, the transportation means may combine the several elements in the transportation means based on different functions, to obtain corresponding subsystems with different functions. During actual application, the transportation means may include more or fewer subsystems or elements. This is not limited in this application.

The transportation means in this embodiment of this application may be a known transportation means like a vehicle, an airplane, a ship, or a rocket, or may be a new transportation means that is to emerge in the future. The vehicle may be an electric vehicle, a fuel vehicle, or a hybrid power vehicle, for example, a pure electric vehicle, a range extended electric vehicle, a hybrid electric vehicle, a fuel cell vehicle, or a new energy vehicle. This is not specifically limited in this application.

For example, the lighting prompt system is a vehicle lamp. An embodiment of this application further provides a vehicle lamp. FIG. 15 is a diagram of a function of a vehicle lamp according to an embodiment of this application. As shown in FIG. 15, the vehicle lamp 200 includes a controller 210, a drive module 220, and a lighting module 230. Because a vehicle usually has a left headlamp and a right headlamp, the lighting module 230 is divided into left and right lighting modules, and usually has respective corresponding drive modules 220. Certainly, a case in which a same drive module is used to drive the two lighting modules 230 is not excluded. Generally, the controller 210 communicates with a computer system in the vehicle through a bus, is configured to receive various information or control signals, and then separately send the information to the two drive modules 220, to control the drive modules 220 to drive the corresponding lighting modules 230. This achieves a desired lighting effect. It should be noted that, with development of technologies, a function of the controller 210 may be integrated into the computer system of the entire vehicle for implementation, and the computer system directly controls the drive module 220 to drive the corresponding lighting module 230. This is not limited in this application. In addition, some sensing modules may be further integrated into the vehicle lamp 200. For example, any one of sensing modules such as a lidar, a millimeter-wave radar, or an infrared detection apparatus is integrated into a smart vehicle lamp, to form a vehicle lamp with integrated sensing and lighting.

The controller 210 may include one or more processors and a memory. The memory is configured to store code for parsing instructions from the computer system and code for controlling the drive module 220. The processor parses the instructions based on the code, and controls the drive module 230. In actual application, the memory may be inside the controller 210, or may be outside the controller 210. This is not limited in this application. The processor may be one or more field-programmable gate arrays (field-programmable gate arrays, FPGAs), an application-specific integrated chip (application-specific integrated circuit, ASIC), a system on chip (system on chip, SoC), a central processing unit (central processor unit, CPU), a network processor (network processor, NP), a digital signal processor (digital signal processor, DSP), a micro controller unit (micro controller unit, MCU), a programmable logic device (programmable logic device, PLD) or another integrated chip, or any combination of the foregoing chips or processors. The memory may include a volatile memory (volatile memory), for example, a RAM. Alternatively, the memory may include a non-volatile memory (non-volatile memory), for example, a ROM, a flash memory (flash memory), a hard disk drive HDD, or a solid-state drive SSD. Alternatively, the memory may include a combination of the foregoing types of memories.

The drive module 220 and the lighting module 230 are matched. For example, when the lighting module 230 uses a digital light processing (Digital Light Processing, DLP) technology, the drive module 220 is a drive chip of a digital micromirror device (Digital Micro-mirror Device, DMD). When the lighting module 230 uses a liquid crystal display (Liquid Crystal Display, LCD) technology, the drive module 220 is a drive chip of an LCD. When the lighting module 230 uses a liquid crystal on silicon (Liquid Cristal on Silicon, LCOS), the drive module 220 is a drive chip of the LCOS. This is not limited in this application.

The lighting module 230 may implement an ADB function by using technologies such as a matrix LED, a micro-LED, the DMD, the LCD, the LCOS, and laser scanning, and may further project a text, a traffic sign, or even a video, to improve driving safety and user experience. It should be understood that FIG. 15 is merely a diagram of a vehicle lamp, and does not constitute a limitation. The vehicle lamp may implement a function of high and low beams when implementing projection by using the lighting module 230, or may include an independent high and low beam module. If the independent high and low beam module is included, the high and low beam module may be controlled by the controller 210 to turn on or off the high beam and the low beam, or may communicate with the computer system 110 in FIG. 14 through the bus, and may be controlled by the computer system 110 to turn on or off the high beam and the low beam. This is not limited in this application.

Finally, it should be noted that: The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A vehicle lamp control method, comprising:
detecting a first signal transmitted by a first device;
when detecting that the first device meets a trigger condition, starting a vehicle lamp control system; and
adjusting a vehicle lamp of a vehicle based on a real-time status change of the first device.

2. The method according to claim 1, wherein that the first device meets a trigger condition comprises:
a distance between the first device and the vehicle is less than or equal to a preset distance;
and/or
a shape formed based on a real-time position change of the first device meets a first preset shape;
and/or
a movement acceleration of the first device is greater than or equal to a preset value.

3. The method according to claim 1 or 2, wherein the real-time status change of the first device comprises at least one of a real-time change of the distance between the first device and the vehicle, the real-time position change of the first device, and a real-time movement acceleration change of the first device.

4. The method according to any one of claims 1 to 3, wherein the adjusting a vehicle lamp based on a real-time status change of the first device comprises:
adjusting a projected image of the vehicle lamp based on the real-time position change of the first device.

5. The method according to any one of claims 1 to 4, wherein the adjusting a vehicle lamp based on a real-time status change of the first device comprises:
adjusting the vehicle lamp based on the real-time position change of the first device, so that a projection of the vehicle lamp follows the first device.

6. The method according to any one of claims 1 to 5, wherein the method further comprises:
detecting a second signal transmitted by a second device; and
when the second device is detected, adjusting the vehicle lamp based on the real-time status change of the first device and a real-time status change of the second device.

7. The method according to claim 6, wherein the adjusting the vehicle lamp based on the real-time status change of the first device and a real-time status change of the second device comprises:
adjusting the projected image of the vehicle lamp based on a real-time change of a relative position between the first device and the second device.

8. The method according to claim 6, wherein the adjusting the vehicle lamp based on the real-time status change of the first device and a real-time status change of the second device comprises:
adjusting the vehicle lamp based on the real-time position change of the first device and a real-time position change of the second device, so that the projection of the vehicle lamp follows the first device and the second device.

9. The method according to claim 6, wherein the adjusting the vehicle lamp based on the real-time status change of the first device and a real-time status change of the second device comprises:
adjusting a game projection of the vehicle lamp based on the real-time status change of the first device and the real-time status change of the second device, so that the first device performs game interaction with the second device.

10. The method according to claim 9, wherein the method further comprises:
when the shape formed based on the real-time position change of the first device and a shape formed based on a real-time position change of the second device meet a second preset shape, controlling the vehicle lamp to perform game projection.

11. The method according to any one of claims 1 to 10, wherein the first device is an ultra-wideband UWB device.

12. A transportation means, comprising a processor and a vehicle lamp control system, wherein the processor is configured to:
detect a first signal transmitted by a first device;
when detecting that the first device meets a trigger condition, start the vehicle lamp control system; and
control, based on a real-time status change of the first device, the vehicle lamp control system to adjust a vehicle lamp.

13. The transportation means according to claim 12, wherein that the first device meets a trigger condition comprises:
a distance between the first device and the vehicle is less than or equal to a preset distance;
and/or
a shape formed based on a real-time position change of the first device meets a first preset shape;
and/or
a movement acceleration of the first device is greater than or equal to a preset value.

14. The transportation means according to claim 12 or 13, wherein the real-time status change of the first device comprises at least one of a real-time change of the distance between the first device and the vehicle, the real-time position change of the first device, and a real-time movement acceleration change of the first device.

15. The transportation means according to any one of claims 12 to 14, wherein the processor is specifically configured to:
control, based on the real-time position change of the first device, the vehicle lamp control system to adjust a projected image of the vehicle lamp.

16. The transportation means according to any one of claims 12 to 15, wherein the processor is specifically configured to:
control, based on the real-time position change of the first device, the vehicle lamp control system to adjust the vehicle lamp, so that a projection of the vehicle lamp follows the first device.

17. The transportation means according to any one of claims 12 to 16, wherein the processor is specifically configured to:
control, based on the real-time status change of the first device and a real-time status change of the second device, the vehicle lamp control system to adjust the vehicle lamp.

18. The transportation means according to claim 17, wherein the processor is specifically configured to:
control, based on a real-time change of a relative position between the first device and the second device, the vehicle lamp control system to adjust the projected image of the vehicle lamp.

19. The transportation means according to claim 17, wherein the processor is specifically configured to:
control, based on the real-time position change of the first device and a real-time position change of the second device, the vehicle lamp control system to adjust the vehicle lamp, so that the projection of the vehicle lamp follows the first device and the second device.

20. The transportation means according to claim 17, wherein the processor is specifically configured to:
control, based on the real-time status change of the first device and the real-time status change of the second device, the vehicle lamp control system to adjust a game projection of the vehicle lamp, so that the first device performs game interaction with the second device.

21. The transportation means according to claim 20, wherein when the shape formed based on the real-time position change of the first device and a shape formed based on a real-time position change of the second device meet a second preset shape, the processor is further configured to control the vehicle lamp control system to drive the vehicle lamp to perform game projection.

22. The transportation means according to any one of claims 12 to 21, wherein the first device is an ultra-wideband UWB device.

23. A vehicle lamp control system, wherein the system comprises a control module and a lighting module, wherein
when a first device meets a trigger condition, the control module is configured to start the lighting module; and
the control module is further configured to control the lighting module based on a real-time status change of the first device.

24. The system according to claim 23, wherein that a first device meets a trigger condition comprises:
a distance between the first device and a vehicle is less than or equal to a preset distance;
and/or
a shape formed based on a real-time position change of the first device meets a first preset shape;
and/or
a movement acceleration of the first device is greater than or equal to a preset value.

25. The system according to claim 23 or 24, wherein the real-time status change of the first device comprises at least one of a real-time change of the distance between the first device and the vehicle, the real-time position change of the first device, and a real-time movement acceleration change of the first device.

26. The system according to any one of claims 23 to 25, wherein the control module is further configured to:
control a projected image of the lighting module based on the real-time position change of the first device.

27. The system according to any one of claims 23 to 26, wherein the control module is further configured to:
control the lighting module based on the real-time position change of the first device, so that the projected image of the lighting module follows the first device.

28. The system according to any one of claims 23 to 27, wherein the control module is further configured to:
control the lighting module based on the real-time status change of the first device and a real-time status change of a second device.

29. The system according to claim 28, wherein the control module is further configured to:
control the projected image of the lighting module based on the real-time status change of the first device and the real-time status change of the second device.

30. The method according to claim 28, wherein the control module is further configured to:
control the projected image of the lighting module based on a real-time change of a relative position between the first device and the second device.

31. The system according to claim 28, wherein the control module is further configured to:
control the lighting module based on the real-time position change of the first device and a real-time position change of the second device, so that the projected image of the lighting module follows the first device and the second device.

32. The system according to claim 28, wherein the control module is further configured to:
control a game projection of the lighting module based on the real-time status change of the first device and the real-time status change of the second device, so that the first device performs game interaction with the second device.

33. The system according to any one of claims 23 to 32, wherein the first device is an ultra-wideband UWB device.
